# EUROPÄISCHE PATENTSCHRIFT

(11) **EP 2 690 611 B1**
(45) Veröffentlichungstag und Bekanntmachung des Hinweises auf die Patenterteilung: **24.02.2021**
(21) Anmeldenummer: 13175066.3
(22) Anmeldetag: 04.07.2013
(51) Int. Cl.: G08B 17/12, G08B 29/18

(54) **Brandüberwachungssystem**
Fire monitoring system
Système de surveillance d'incendie

(30) Priorität: 26.07.2012 DE 102012213125
(43) Veröffentlichungstag der Anmeldung: 29.01.2014
(73) Patentinhaber: Robert Bosch GmbH, 70442 Stuttgart (DE)
(72) Erfinder: Hanses, Thomas, 83620 Feldkirchen-Westerham (DE); Tuermer, Joerg, 85560 Ebersberg (DE)

(56) Entgegenhaltungen:
- DE-A1-102011 055 665
- US-A1- 2004 175 040

## Beschreibung

### Stand der Technik

Die Erfindung betrifft ein Brandüberwachungssystem mit mindestens einer ersten und einer zweiten Überwachungskamera zur Ausgabe von Überwachungsbildern, wobei sich die Sichtfelder der ersten und zweiten Überwachungskamera in einem gemeinsamen Überwachungsbereich überlappen, und mit einer Auswerteeinrichtung zur Erkennung eines Brands in den Überwachungsbildern.

Die Einsatzbereiche von Überwachungskameras haben sich über die Jahre stark verbreitert, da durch die Entwicklung von kostengünstigen, zuverlässigen und schnellen Computern eine automatisierte Auswertung von Überwachungsbildern der Überwachungskameras vereinfacht wurde. Auch im Bereich der Brandüberwachung werden vermehrt Überwachungskameras eingesetzt, die auf Basis von optisch erkennbaren Brandemissionen einen Brand automatisiert erkennen können.

In der Druckschrift DE 10 2008 001 383 A1 wird beispielsweise eine Detektionsvorrichtung zur Detektion von Bränden und/oder von Brandmerkmalen in einem Überwachungsbereich mit einer Kameraeinrichtung vorgeschlagen. Die Kameraeinrichtung erfasst einen sehr breiten Sichtwinkelbereich, wobei jedoch ein Sichtwinkelteilbereich maskiert ist und auf diese Weise von einer Auswertung ausgenommen ist.

Die Druckschrift DE 200 22 869 U1 offenbart eine Branderkennungsanlage zum Detektieren von sichtbaren und verdeckten Brandherden. In einer Ausführungsform der Branderkennungsanlage umfasst diese eine Videokamera und eine Infrarotkamera, welche den gleichen Sichtwinkelbereich observieren. Durch die unterschiedlichen Kameraarten wird es ermöglicht, in dem identischen Sichtbereich unterschiedliche Brandmerkmale erkennen zu können.

In der Druckschrift DE 10 2011 055 665 A1 ist eine Bildverarbeitungsvorrichtung beschrieben. Die Bildverarbeitungsvorrichtung verwendet eine Basiskonfiguration mit einer Bildverarbeitungssteuereinrichtung, die von einer Stereokamera Bilder verarbeitet. Aus einem Paar Stereobilder wird verarbeitet um dreidimensionale Abstandsinformationen zu berechnen.

Die Druckschrift US 2004/0175040 A1, die den nächstkommenden Stand der Technik bildet, beschreibt ein Verfahren zur automatischen Erkennung von Bränden. Das Verfahren basiert auf Flammen- und/oder Raucherkennung durch Analyse einer Bildsequenz. Die Analyse nutzt mehrere Bildverarbeitungsalgorithmen. Ein Algorithmus besteht darin, den Frequenzinhalt mindestens eines Bildes der Sequenz mit dem Frequenzinhalt eines Referenzbildes zu vergleichen, um eine Dämpfung hoher Frequenzen unabhängig von Schwankungen auf anderen Teilen des Spektrums zu detektieren.

### Offenbarung der Erfindung

Im Rahmen der Erfindung wird ein Brandüberwachungssystem mit den Merkmalen des Anspruchs 1 vorgeschlagen. Bevorzugte oder vorteilhafte Ausführungsformen der Erfindung ergeben sich aus den Unteransprüchen, der nachfolgenden Beschreibung sowie den beigefügten Figuren.

Das Brandüberwachungssystem gemäß der Erfindung umfasst mindestens eine erste und eine zweite Überwachungskamera, welche ausgebildet sind, Überwachungsbilder zu erstellen. Die erste und die zweite Überwachungskamera sind im Betrieb so angeordnet, dass sich deren Sichtfelder in einem gemeinsamen Überwachungsbereich überlappen. Die optischen Achsen der Überwachungskameras sind zueinander gewinkelt und/oder windschief angeordnet. Insbesondere wird der Überwachungsbereich aus unterschiedlichen Perspektiven aufgenommen. Neben dem gemeinsamen Überwachungsbereich können die beiden Überwachungskameras optional zusätzliche Bereiche, z.B. angrenzende Bereiche, überwachen. Als Sichtfelder werden die Bereiche verstanden, die auf den Überwachungsbildern der Überwachungskameras abgebildet sind.

Das Brandüberwachungssystem ist ausgebildet, einen Brand in dem Überwachungsbereich zu detektieren. Hierzu weist das Brandüberwachungssystem eine Auswerteeinrichtung auf, welche zur Erkennung des Brandes in den Überwachungsbildern ausgebildet ist. Bei der Erkennung des Brandes können beliebige Brandmerkmale in den Überwachungsbildern, wie z.B. Glut, Flammen, Rauch, erhitzte oder glühende Oberflächen bzw. Körper ausgewertet werden.

Im Rahmen der Erfindung wird vorgeschlagen, dass die Auswerteeinrichtung zur Ausgabe einer Positionsinformation, insbesondere einer dreidimensionalen Positionsinformation, des Brandes durch Auswertung der Überwachungsbilder ausgebildet ist.

Neben der Detektion des Brandes durch Auswertung der Überwachungsbilder wird ergänzend die Position des Brandes durch Auswertung der Überwachungsbilder ermittelt und als Positionsinformation ausgegeben. Die Positionsinformation des Brandes kann sich auch auf die Position eines Brandmerkmals, insbesondere einer Glut, von Flammen, von Rauch etc. beziehen. Wurde beispielsweise von der Auswerteeinrichtung eine glühende Oberfläche als Brandmerkmal des Brands erkannt, wird die Position der glühenden Oberfläche als Positionsinformation des Brandes ausgegeben.

Die Erfindung weist den Vorteil auf, dass neben der Detektion des Brandes zugleich die Positionsinformation ausgegeben wird, die vielfach vorteilhaft verwendbar ist:
So kann Löschpersonal gezielt zu der über die Positionsinformation angegebenen Brand geleitet werden, um eine Bekämpfung des Brandes zu beschleunigen. Es ist auch möglich, automatisiert Löschmaßnahmen, wie z.B. der Betrieb einer Sprinkleranlage oder Abschnitten davon, an der tatsächlichen Position des Brandes einzuleiten, um damit Beschädigungen, die durch die Löschmaßnahmen entstehen können, zu minimieren. Ferner ist es vorteilhaft, die Position des Brandes zu kennen, um eine Risikoanalyse durchzuführen, beispielsweise kann geprüft werden, ob in der Nähe des Brandes explosionsgefährdete Stoffe gelagert sind oder ob durch die Position des Brandes Menschen bedroht oder Fluchtwege abgeschnitten werden.

Bei einer bevorzugten Realisierung der Erfindung erfolgt die Bestimmung der Positionsinformation durch die Auswerteeinrichtung über Stereoanalyse der Überwachungsbilder der mindestens zwei Überwachungskameras. Die Gewinnung von Positionsinformationen und insbesondere 3D-Informationen mit Hilfe von mindestens zwei Kameras über Stereoanalyse sind bekannt. Als Beispiel zur Offenbarung der geometrisch-optischen Grundlagen wird auf den wissenschaftlichen Artikel von Hartley, R. und A. Zisserman "Multiple View Geometry in Computer Vision" (Cambridge University Press, New York, USA, 2004) verwiesen.

Bei einer möglichen Vorgehensweise wird die Positionsinformation eines Objekts, welches in den Überwachungsbildern von den mindestens zwei Überwachungskameras abgebildet ist, bestimmt, indem zunächst die Position der Abbildung des Objekts in den Überwachungsbildern der mindestens zwei Überwachungskameras bestimmt wird. Dieser Schritt wird auch als das Auffinden von Korrespondenzen bezeichnet.

In einem nächsten Schritt wird auf Basis der Position der Abbildungen in den Überwachungsbildern sowie in Kenntnis von Kameraparametern und der Position sowie Ausrichtung der Überwachungskameras die dreidimensionale Position des Objekts als Positionsinformation bestimmt.

Das Objekt, dessen Positionsinformation bestimmt wird, kann insbesondere als ein Objekt mit Brandmerkmalen ausgebildet sein, wie z.B. ein Glutbereich, ein Rauchbereich, ein Flammenbereich etc.

Besonders bevorzugt wird in einem ersten Schritt in den Überwachungsbildern von beiden Überwachungskameras der Brand erkannt und als das Objekt in den Überwachungsbildern bestimmt. In einem nächsten Schritt wird die Positionsinformation des Brandes ermittelt, wie dies zuvor beschrieben wurde. In einer anderen Ausgestaltung ist es auch möglich, dass nur eine der Überwachungskameras den Brand erkennt und als Objekt in dem Überwachungsbild bestimmen kann. Bei dem Überwachungsbild der anderen Überwachungskamera wird als korrespondierendes Objekt ein ähnliches oder identisches Objekt gewählt.

Es ist möglich, dass die mindestens zwei Überwachungskameras räumlich sehr eng zueinander angeordnet sind, sodass eine kleine Basislinie gebildet ist. Der Abstand der Überwachungskamera, insbesondere der Abstand des Schnittpunkts der optischen Achse mit einem Objektiv der Überwachungskameras zueinander ist in dieser Ausgestaltung kleiner als 50 cm gewählt. Insbesondere können die mindestens oder genau zwei Überwachungskameras in einem gemeinsamen Gehäuse angeordnet sein.

Um jedoch eine möglichst genaue Tiefeninformationen und damit Positionsinformation zu erhalten, ist es bevorzugt, dass die erste und die zweite Überwachungskamera einen Abstand von mindestens 1 m, vorzugsweise von mindestens 5 m und insbesondere von mindestens 10 m einnehmen. Ein derartiger Abstand wird auch als große Basislinie bezeichnet. Zwar ist das Korrespondenzproblem zur Detektierung von korrespondierenden Objekten in den Überwachungsbildern der mindestens zwei Überwachungskameras durch den großen Abstand vergrößert. Da jedoch ein Brand ein eindeutiges Objekt in den Überwachungsbildern ist, wiegt dieser Nachteil geringer gegenüber dem Vorteil, dass die Positionsinformation genauer bestimmt werden kann.

In Bezug auf die eingangs genannten Vorteile ist es bevorzugt, dass sich der gemeinsame Überwachungsbereich über eine Länge auf einem Boden oder einer Wand des gemeinsamen Überwachungsbereichs über mindestens 20 m, vorzugsweise über mindestens 50 m erstreckt. In dieser Größenordnung des Überwachungsbereichs treten die Vorteile der Erfindung besonders stark in den Vordergrund, da z.B. bei einer Halle mit einer Länge von 50 m und einem Brand an einem Endbereich der Halle an dem anderen Endbereich der Halle keine Löschtätigkeiten notwendig sind. In diesem Beispiel ist es möglich, dass nur z.B. die ersten 5 m der Halle mit Löschmaßnahmen beaufschlagt werden.

Bei einer möglichen Ausgestaltung der Erfindung ist vorgesehen, dass mindestens eine der Überwachungskameras, vorzugsweise beide Überwachungskameras, als IR-Kameras ausgebildet sind. Insbesondere weisen die IR-Kameras einen Wellenlängenerfassungsbereich größer als 3 µm, vorzugsweise größer als 5 µm und insbesondere größer als 7 µm auf. Mit derartigen Überwachungskameras können bereits erhöhte Temperaturen, wie diese z.B. bei einem verdeckten Schwelbrand entstehen, als Brandmerkmal sicher detektiert werden.

Bei einer anderen möglichen Ausgestaltung der Erfindung ist mindestens eine der Überwachungskameras, vorzugsweise beide Überwachungskameras als NIR-Kameras ausgebildet, welche in einem Wellenlängenbereich von größer als 900 nm, insbesondere bis 3 µm sensitiv sind. In diesem Wellenlängenbereich kann störendes Umgebungslicht effektiv ausgeblendet werden, sodass nur Objekte mit sehr hohen Temperaturen als Brand, insbesondere als Brandmerkmale detektiert werden.

Ferner ist es möglich, dass mindestens eine der Überwachungskameras, vorzugsweise beide Überwachungskameras, als Überwachungskameras im sichtbaren Bereich zwischen 400 nm und 650 nm ausgebildet sind, wobei der Brand durch eine Bildinhaltsanalyse detektiert wird.

Es ist besonders bevorzugt, dass der Brand, insbesondere die Brandmerkmale, durch Auswertung eines charakteristischen Flackerns von Flammen, einer charakteristischen Farbe von Flammen, einer charakteristischen Schlierenbildung durch Rauchentwicklung etc. detektiert wird.

Erfindungsgemäß umfasst das Brandüberwachungssystem ein Maskierungsmodul, welches ausgebildet ist, Teilbereiche von dem gemeinsamen Überwachungsbereich in mindestens einem der Überwachungsbilder zu maskieren und dadurch von der Auswertung auszunehmen. Derartige Maskierungsbereiche als Teilbereiche können vorteilhaft eingesetzt werden, wenn in dem Überwachungsbereich bekanntermaßen Störobjekte, insbesondere bewegte Störobjekte, vorhanden sind. So ist es beispielsweise möglich, einen durchlaufenden Kran als Störobjekt von der Auswertung auszuschließen, indem der Bereich, durch den der Kran fährt, maskiert wird. Der Vorteil dieser Weiterbildung ist eine Minimierung von Fehlalarmen bei wiederkehrenden, ortsgebundenen Störgrößen oder Störobjekten.

Bei einer sehr einfachen und dadurch leicht umzusetzenden, nicht beanspruchten Realisierung ist das Maskierungsmodul ausgebildet, für jede Überwachungskamera einen 2D-Bereich in dem Überwachungsbild zu maskieren. Ein derartiger Maskierungsbereich kann beispielsweise interaktiv durch einen Benutzer einskizziert werden.

Erfindungsgemäß umfasst das Brandüberwachungssystem ein Modellmodul, wobei in dem Modellmodul ein Modell, insbesondere ein 3D-Modell, des gemeinsamen Überwachungsbereichs vorhanden ist und wobei das Maskierungsmodul ausgebildet ist, einen 3D-Bereich in dem Modell zu maskieren und dadurch von der Auswertung auszunehmen. In dieser Ausgestaltung kann ein Benutzer ein Volumen in dem Modell definieren und dadurch Störbereiche, insbesondere Bereiche, in denen Störobjekte angeordnet sind, von der Auswertung ausnehmen.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine schematische Blockdarstellung eines Brandüberwachungssystems als ein erstes Ausführungsbeispiel der Erfindung;
Figur 2 eine schematische dreidimensionale Darstellung des Brandüberwachungssystems in der Figur 1 im Betrieb;
Figur 3 in gleicher Darstellung wie in der Figur 2 eine schematische Illustration der Maskierungsfunktion des Brandüberwachungssystems in den vorhergehenden Figuren.

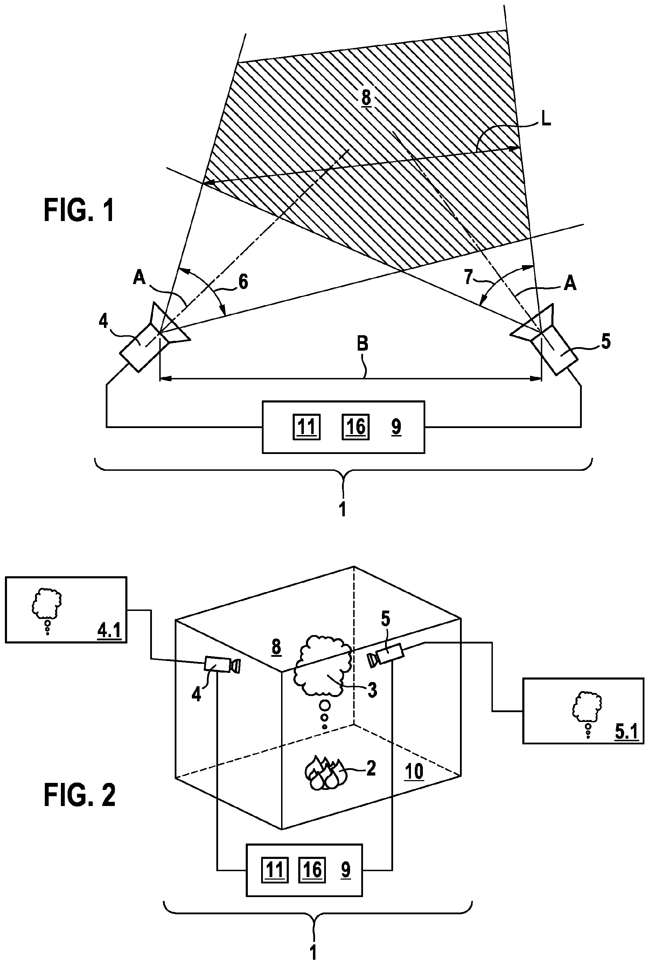

In der Figur 1 ist in einer schematischen Blockdarstellung ein Brandüberwachungssystem 1 dargestellt, welches zur Erkennung eines Brandes 2 (Figur 2) und insbesondere von Brandmerkmalen, wie Rauch 3 (Figur 2) ausgebildet ist.

Das Brandüberwachungssystem 1 umfasst eine erste und eine zweite Überwachungskamera 4, 5, deren Sichtfeld 6 bzw. 7 auf einen gemeinsamen Überwachungsbereich 8 gerichtet ist, sodass sich deren Sichtfelder 6,7 in dem gemeinsamen Überwachungsbereich 8 überlappen. Der gemeinsame Überwachungsbereich 8 hat eine Maximalausdehnung L, welche mindestens 10 m oder 20 m beträgt. Der gemeinsame Überwachungsbereich 8 kann beispielsweise den Innenraum einer Maschinenhalle, Lagerhalle oder auch einen Außenbereich darstellen.

Die Überwachungskameras 4,5 sind voneinander beabstandet angeordnet, wobei ein Abstand B gemessen von dem Schnittpunkt der optischen Achsen A mit einem Objektiv der Überwachungskameras 4, 5 mindestens 1 m beträgt.

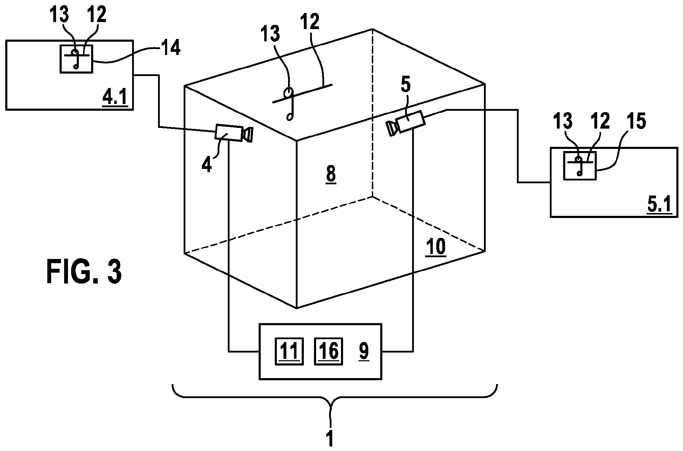

Die erste und die zweite Überwachungskamera 4, 5 erzeugen jeweils Überwachungsbilder, wobei auf jedem der Überwachungsbilder der gemeinsame Überwachungsbereich 8, jedoch aus unterschiedlichen Sichtwinkeln oder aus einer unterschiedlichen Perspektive dargestellt ist. Die Überwachungsbilder der ersten Überwachungskamera 4 sind mit 4.1, die Überwachungsbilder der zweiten Überwachungskamera 5 sind mit dem Bezugszeichen 5.1 versehen (Figuren 2, 3).

Die Überwachungsbilder 4.1, 5.1 werden an eine Auswerteeinrichtung 9 weitergeleitet, wobei die Auswerteeinrichtung ausgebildet ist, den Brand 2, insbesondere die Brandmerkmale wie z.B. den Rauch 3, auf den Überwachungsbildern 4.1, 5.1 zu erkennen. Die Detektion des Brands 2 bzw. des Rauchs 3 oder anderer Brandmerkmale kann auf verschiedenen Prinzipien beruhen:
Zum einen können die Überwachungskameras 4, 5 als Wärmebildkameras, insbesondere Infrarotkameras ausgebildet sein, sodass diese die thermische Strahlung des Brands 2 detektieren können. In dieser Ausgestaltung ist es auch möglich, verdeckte Brände 2 zu erkennen, indem erhitzte Oberflächen von anderen Objekten wahrgenommen werden.

Es ist auch möglich, dass die Überwachungskameras 4,5 im nahen Infrarotbereich, insbesondere in einem Bereich zwischen 700 und 950 nm sensitiv sind, sodass sehr heiß glühende Objekte, insbesondere gegenüber normalem Umgebungslicht, sehr gut erkannt und als Brand 2 detektiert werden können.

Ferner ist es möglich, durch Bildinhaltsanalysen z.B. den Rauch 3 zu erkennen, indem Veränderungen gegenüber einem Referenzbildhintergrund bestimmt werden.

Nachdem in mindestens einem Überwachungsbild 4.1, 5.1, vorzugsweise in beiden Überwachungsbildern 4.1, 5.1 der beiden Überwachungskameras 4,5 der Brand 2 oder Brandmerkmale, insbesondere der Rauch 3, als Objekte detektiert wurden, wird mittels Stereoanalyse die Position, insbesondere die dreidimensionale Position des Brands 2 bzw. der Brandmerkmale, insbesondere des Rauchs 3, ermittelt. Diese Ermittlung erfolgt in Kenntnis der Position und der Ausrichtung der Überwachungskameras 4, 5 sowie der Parameter, wie z.B. Brennweite, der Überwachungskameras 4,5. Als Ergebnis kann die Auswerteeinrichtung 9 eine Positionsinformation des Brands 2 bzw. der Brandmerkmale, insbesondere des Rauchs 3, ausgeben.

Diese Positionsinformation definiert den Brand 2 bzw. die Brandmerkmale hinsichtlich der Position in dem gemeinsamen Überwachungsbereich 8, z.B. als dreidimensionale Koordinate. Die Positionsinformation kann zusammen mit der Branddetektionsmeldung z.B. an eine Überwachungszentrale, die einen optionalen Bestandteil des Brandüberwachungssystems 1 bildet, weitergeleitet werden, sodass zentral wahlweise automatisiert oder manuell Gegenmaßnahmen oder Rettungsmaßnahmen eingeleitet werden können. Eine mögliche Gegenmaßnahme besteht in der Aktivierung von Löscheinrichtungen, wie z.B. einer Sprinkleranlage, wobei die Überwachungszentrale ausgebildet ist, nur in einem Teilbereich des Überwachungsbereichs 8 die Löscheinrichtung selektiv zu aktivieren, in dem gemäß der Positionsinformation der Brand 2 bzw. die Brandmerkmale, insbesondere der Rauch 3 positioniert ist/sind. Weitere Teilbereiche des gemeinsamen Überwachungsbereichs 8 können frei von Löschmaßnahmen verbleiben.

Beispielsweise können in dem gemeinsamen Überwachungsbereich 8 drei oder mehr Löscheinrichtungen örtlich verteilt angeordnet sein, wobei nur die Löscheinrichtung aktiviert wird, deren Löschbereich den Ort der Positionsinformation abdeckt. Durch diese Maßnahmen können Löschmaßnahmen selektiv eingesetzt werden und auf diese Weise Beschädigungen des Überwachungsbereichs 8 durch Löschmaßnahmen vermieden oder zumindest verringert werden. Weitere Vorteile ergeben sich durch Ausnutzung der Positionsinformation hinsichtlich der Koordinierung von Löschkräften, hinsichtlich der Evakuierung von Menschen in dem gemeinsamen Überwachungsbereich 8 oder von Menschen, deren Fluchtweg durch den gemeinsamen Überwachungsbereich 8 verläuft.

In der Figur 2 ist das Brandüberwachungssystem 1 in einer schematischen dreidimensionalen Darstellung gezeigt, wobei dieses in einem Raum 10 installiert ist. Die Überwachungskameras 4, 5 sind voneinander beabstandet angeordnet und beobachten den gemeinsamen Überwachungsbereich 8, wobei in dem Überwachungsbereich 8 ein Brandmerkmal, hier Rauch 3, angeordnet ist. In den kleineren Kästen sind die Überwachungsbilder 4.1 und 5.1 dargestellt, welche beide den Rauch 3 als Brandmerkmal des Brands 2 zeigen. Diese Objekte sind somit als korrespondierende Objekte in den beiden Überwachungsbildern 4.1,5.1 erkennbar. Aufgrund der unterschiedlichen Position der Objekte in den Überwachungsbildern 4.1,5.1 und in Kenntnis der Kameraposition, -ausrichtung und -parameter kann auf die dreidimensionale Positionen des Objekts, also des Rauchs 3, in dem Raum 10 geschlossen werden. Die Positionsinformation wird beispielsweise als XYZ-Position des Schwerpunkts oder eines Fußpunkts des Objekts, insbesondere des Rauchs 3, angegeben.

Die Figur 3 illustriert eine optionale Funktion des Brandüberwachungssystems 1, welche durch ein Maskierungsmodul 11 umgesetzt wird, welches einen Teil des Brandüberwachungssystems 1, insbesondere der Auswerteeinrichtung 9 bildet. Das Maskierungsmodul 11 dient zur Maskierung von temporären Störobjekten, in diesem Beispiel von einem an einer Schiene 12 aufgehängten und durchlaufenden Kran 13.

Das Maskierungsmodul 11 erlaubt in einer einfachsten Ausgestaltung, dass in den Überwachungsbildern 4.1,5.1 durch den Benutzer interaktiv Maskierungsbereiche 14,15 eingetragen werden, wobei die Branddetektion durch die Auswerteeinrichtung 9 in den Maskierungsbereichen 14,15 nicht durchgeführt wird. Dieses optionale Maskierungsmodul 11 verringert die Fehlalarmrate durch Eliminierung von bekannten Störobjekten.

Optional ergänzend umfasst das Brandüberwachungssystem 1, insbesondere die Auswerteeinrichtung 9, ein Modellmodul 16, welches ein Modell des gemeinsamen Überwachungsbereichs 8 beinhaltet. Derartige 3D-Modelle sind beispielsweise aus der Gehäusetechnik, Architektur, etc. bekannt. In dieser Ausgestaltung ist es möglich, dass der Benutzer ein dreidimensionales Maskierungsvolumen einträgt, wobei in dem Maskierungsvolumen durch das Maskierungsmodul 11 keine Auswertung zur Detektion eines Brands 2, insbesondere Brandmerkmalen, wie z.B. Rauch 3, durchgeführt wird oder nicht weiter verfolgt werden.

## Patentansprüche

1. Brandüberwachungssystem (1)
mit mindestens einer ersten und einer zweiten Überwachungskamera (4, 5) zur Ausgabe von Überwachungsbildern (4.a; 5.1), wobei sich die Sichtfelder (6, 7) der ersten und der zweiten Überwachungskamera (4, 5) in einem gemeinsamen Überwachungsbereich (8) überlappen,
mit einer Auswerteeinrichtung (9) zur Erkennung eines Brands (2,3) in den Überwachungsbildern (4.1, 5.1) ausgebildet ist,
wobei die Auswerteeinrichtung (9) zur Ausgabe einer Positionsinformation des Brandes (2, 3) durch Auswertung der Überwachungsbilder (4.a, 5.1) ausgebildet ist,
**gekennzeichnet durch**
ein Maskierungsmodul (11) und ein Modellmodul (16),
wobei das Maskierungsmodul (11) ausgebildet ist, Teilbereiche (14, 15) in dem gemeinsamen Überwachungsbereich (8) zu maskieren und dadurch von der Auswertung auszunehmen, wobei in dem Modellmodul (16) ein Modell des gemeinsamen Überwachungsbereichs (8) angeordnet ist und wobei das Maskierungsmodul (11) ausgebildet ist, einen 3D-Bereich in dem Modell zu maskieren und dadurch von der Auswertung auszunehmen.

2. Brandüberwachungssystem (1) nach Anspruch 1, **dadurch gekennzeichnet, dass** die Auswerteeinrichtung (9) zur Bestimmung der Positionsinformation durch Stereoanalyse ausgebildet ist.

3. Brandüberwachungssystem (1) nach Anspruch 1 oder 2, **dadurch gekennzeichnet, dass** die erste und die zweite Überwachungskamera (4, 5) einen Abstand (B) von mindestens 1 m, vorzugsweise mindestens 5 m und insbesondere von mindestens 10 m einnehmen.

4. Brandüberwachungssystem (1) nach einem der vorhergehenden Ansprüche, **dadurch gekennzeichnet, dass** sich der gemeinsame Überwachungsbereich (8) über eine Länge (L) auf einem Boden oder einer Wand des gemeinsamen Überwachungsbereichs von mindestens 20 m, vorzugsweise von mindestens 50 m erstreckt.

5. Brandüberwachungssystem (1) nach einem der vorhergehenden Ansprüche, **dadurch gekennzeichnet, dass** mindestens eine der Überwachungskameras (4,5) als IR-Kamera ausgebildet sind.

6. Brandüberwachungssystem (1) nach einem der vorhergehenden Ansprüche, **dadurch gekennzeichnet, dass** mindestens eine der Überwachungskameras (4, '5) als NIR-Kameras ausgebildet sind.

7. Brandüberwachungssystem (1) nach einem der vorhergehenden Ansprüche, **dadurch gekennzeichnet, dass** der Brand (2) durch Inhaltsanalyse der Überwachungsbilder (4.1, 5.1), insbesondere Auswertung eines Flackerns und/oder einer Farbe und/oder von Schlieren, erkannt wird.

## Claims

1. Fire monitoring system (1)
having at least a first and a second monitoring camera (4, 5) for outputting monitoring images (4.a; 5.1), wherein the fields of vision (6, 7) of the first and second monitoring cameras (4, 5) overlap in a common monitoring area (8), and is embodied with a evaluation device (9) for detecting a fire (2, 3) in the monitoring images (4.1, 5.1),
wherein the evaluation device (9) is designed to output a position information item of the fire (2, 3) by evaluating the monitoring images (4.a, 5.1), **characterized by**
a masking module (11) and a model module (16), wherein the masking module (11) is designed to mask sub-areas (14, 15) in the common monitoring area (8) and as a result to exclude them from the evaluation,
wherein a model of the common monitoring area (8) is arranged in the model module (16), and wherein the masking module (11) is designed to mask a 3D area in the model and as a result exclude it from the evaluation.

2. Fire monitoring system (1) according to Claim 1, **characterized in that** the evaluation device (9) is designed to determine the position information by means of stereoanalysis.

3. Fire monitoring system (1) according to Claim 1 or 2, **characterized in that** the first and second monitoring cameras (4, 5) assume a distance (B) of at least 1 m, preferably at least 5 m and in particular of at least 10 m.

4. Fire monitoring system (1) according to one of the preceding claims, **characterized in that** the common monitoring area (8) extends over a length (L) on a floor or a wall of the common monitoring area of at least 20 m, preferably of at least 50 m.

5. Fire monitoring system (1) according to one of the preceding claims, **characterized in that** at least one of the monitoring cameras (4, 5) is embodied as an IR camera.

6. Fire monitoring system (1) according to one of the preceding claims, **characterized in that** at least one of the monitoring cameras (4, 5) is embodied as an NIR camera.

7. Fire monitoring system (1) according to one of the preceding claims, **characterized in that** the fire (2) is detected by content analysis of the monitoring images (4.1, 5.1), in particular evaluation of flickering and/or a colour and/or smearing.

## Revendications

1. Système de surveillance d'incendie (1), comprenant
au moins une première et une deuxième caméra de surveillance (4, 5) pour délivrer des images de surveillance (4.a ; 5.1), les champs de vision (6, 7) de la première et de la deuxième caméra de surveillance (4, 5) se chevauchant dans une zone de surveillance commune (8),
un dispositif d'évaluation (9) pour détecter un incendie (2, 3) sur les images de surveillance (4.1, 5.1),
dans lequel le dispositif d'évaluation (9) est réalisé pour délivrer une information de position de l'incendie (2, 3) en évaluant les images de surveillance (4.a, 5.1),
**caractérisé par** un module de masquage (11) et un module de modélisation (16),
le module de masquage (11) étant réalisé pour masquer des zones partielles (14, 15) dans la zone de surveillance commune (8) et pour ainsi les exclure de l'évaluation,
un modèle de la zone de surveillance commune (8) étant disposé dans le module de modélisation (16), et le module de masquage (11) étant réalisé pour masquer une zone en 3D dans le modèle et pour ainsi l'exclure de l'évaluation.

2. Système de surveillance d'incendie (1) selon la revendication 1, **caractérisé en ce que** le dispositif d'évaluation (9) est réalisé pour déterminer l'information de position par analyse stéréo.

3. Système de surveillance d'incendie (1) selon la revendication 1 ou 2, **caractérisé en ce que** la première et la deuxième caméra de surveillance (4, 5) adoptent une distance (B) d'au moins 1 m, de préférence d'au moins 5 m et en particulier d'au moins 10 m.

4. Système de surveillance d'incendie (1) selon l'une quelconque des revendications précédentes, **caractérisé en ce que** la zone de surveillance commune (8) s'étend sur une longueur (L) sur un sol ou une paroi de la zone de surveillance commune d'au moins 20 m, de préférence d'au moins 50 m.

5. Système de surveillance d'incendie (1) selon l'une quelconque des revendications précédentes, **caractérisé en ce qu'**au moins l'une des caméras de surveillance (4, 5) est réalisée sous forme de caméra IR.

6. Système de surveillance d'incendie (1) selon l'une quelconque des revendications précédentes, **caractérisé en ce qu'**au moins l'une des caméras de surveillance (4, 5) est réalisée sous forme de caméra NIR.

7. Système de surveillance d'incendie (1) selon l'une quelconque des revendications précédentes, **caractérisé en ce que** l'incendie (2) est détecté par une analyse de contenu des images de surveillance (4.1, 5.1), en particulier une évaluation d'un scintillement et/ou d'une couleur et/ou de stries.
